# EUROPÄISCHE PATENTSCHRIFT

(11) **EP 2 906 378 B1**
(45) Veröffentlichungstag und Bekanntmachung des Hinweises auf die Patenterteilung: **27.04.2022**
(21) Anmeldenummer: 13765342.4
(22) Anmeldetag: 17.09.2013
(51) Int. Cl.: B23B 47/28, B21J 15/50

(54) **AUFSATZVORRICHTUNG FÜR EIN BOHRSYSTEM SOWIE BOHRSYSTEM ZUM AUSBOHREN EINES VERBINDUNGSELEMENTES**
ATTACHMENT DEVICE FOR A BORING SYSTEM AND BORING SYSTEM FOR BORING A CONNECTION ELEMENT
DISPOSITIF RAPPORTÉ DESTINÉ À UN SYSTÈME DE PERÇAGE ET SYSTÈME DE PERÇAGE PERMETTANT DE PERCER UN ÉLÉMENT D'ASSEMBLAGE

(30) Priorität: 11.10.2012 DE 102012218530
(43) Veröffentlichungstag der Anmeldung: 19.08.2015
(73) Patentinhaber: Bayerische Motoren Werke Aktiengesellschaft, 80809 München (DE)
(72) Erfinder: MAYER, Franz, 85276 Uttenhofen (DE); WEINMANN, Robert, 87719 Mindelheim (DE); HESSING, Florian, 04155 Leipzig (DE); SEBESTYEN, Bela, 82152 Planegg (DE)
(86) Internationale Anmeldenummer: PCT/EP2013/069202
(87) Internationale Veröffentlichungsnummer: WO 2014/056678

(56) Entgegenhaltungen:
- EP-A1- 0 677 665
- GB-A- 510 482
- US-A- 3 015 240
- US-A- 6 092 964

## Beschreibung

Die vorliegende Erfindung betrifft eine Aufsatzvorrichtung für ein Bohrsystem für ein Ausbohren eines nicht lösbaren mechanischen Verbindungselementes, insbesondere einer Nietverbindung, sowie ein Bohrsystem für das Ausbohren eines nicht lösbaren mechanischen Verbindungselementes, insbesondere einer Nietverbindung.

Es ist grundsätzlich bekannt, dass beispielsweise beim Herstellen von Nietverbindungen über eine Vielzahl von Nietverbindungen auch defekte Nietverbindungen hergestellt werden. Dies liegt z. B. an Materialdefekten der Nietköpfe, an Materialdefekten der zu verbindenden Materialien oder an anderen fehlerbehafteten Schritten, die während des Herstellens der Nietverbindung durchgeführt werden. In Summe kann es also vorkommen, dass bei Montagesituationen, in welchen Nietverbindungen hergestellt werden sollen, zu einem gewissen Prozentsatz fehlerhafte Nietverbindungen hergestellt werden. Daher müssen solche fehlerhaften Nietverbindungen wieder entfernt und durch funktionierende Nietverbindungen ersetzt werden. Die fehlerhaften Nietverbindungen werden bei bekannten Montageverfahren durch ein sogenanntes Ausbohren entfernt. Das bedeutet, dass mit Hilfe eines Bohrers die Nietverbindung ausgebohrt und dementsprechend aus dem zugehörigen Nietloch entfernt werden kann. Das Ausbohren erfolgt z. B. mit einem Bohrer, welcher in einem Bohrwerkzeug, insbesondere einem Akkuschrauber, gehalten ist.

Aus den Dokumenten US 3 015 240 A, GB 510,482 A, US 6 092 964 A und EP 0 677 665 A1 sind verschiedene Aufsatzvorrichtungen für Bohrvorrichtungen bekannt.

Dokument EP 0 677 665 A1 beschreibt eine Aufsatzvorrichtung für ein Bohrsystem gemäß dem Oberbegriff des Anspruchs 1.

Nachteilhaft bei der bekannten Vorgehensweise ist es, dass nicht jede Nietverbindung, welche fehlerhaft erzeugt worden ist, auch auf diese Weise entfernt werden kann. Beim Ausbohren der Nietverbindung kann es vorkommen, dass der Bohrer sich mit dem Teil der Nietverbindung, welche ausgebohrt werden soll, verklemmt. Dies führt dazu, dass die Nietverbindung mitdreht und dementsprechend eine Relativbewegung zwischen dem Bohrer und der Nietverbindung unterbleibt. Ohne diese Relativbewegung erfolgt jedoch kein Schneiden über die Schneidkanten des Bohrers, so dass auch kein Bohren in die Nietverbindung erfolgen kann. Das Ausbohren kommt sozusagen zum Stillstand und durch das Mitdrehen der Nietverbindung wird ein Entfernen der Nietverbindung auf diese Weise unmöglich. In einem solchen Fall muss die fehlerhafte Nietverbindung in deutlich aufwendigeren Verfahrensschritten beseitigt werden, so dass ein Zeitverlust und dementsprechend eine deutliche Kostensteigerung für die gesamte Montagesituation die Folge ist. Ebenfalls können durch das Mitdrehen des Verbindungselementes, wie eines Nietelementes, die Fügepartner partiell oder vollständig beschädigt werden, wodurch eine weitere Verwendung dieser Fügepartner nicht möglich ist.

Es ist Aufgabe der vorliegenden Erfindung, die voranstehend beschriebenen Nachteile beim Ausbohren von Verbindungselementen wie Nietverbindungen zumindest teilweise zu beheben. Insbesondere ist es Aufgabe der vorliegenden Erfindung eine Aufsatzvorrichtung für ein Bohrsystem für ein Ausbohren eines Verbindungselementes wie einer Nietverbindung sowie ein Bohrsystem für das Ausbohren eines Verbindungselementes wie einer Nietverbindung zur Verfügung zu stellen, welche in einfacher und kostengünstiger Weise eine Lösung für das Ausbohren des Verbindungselementes zur Verfügung stellen und gleichzeitig die im voranstehenden Absatz beschriebene Mitdrehproblematik vermeiden bzw. reduzieren.

Voranstehende Aufgabe wird gelöst durch eine Aufsatzvorrichtung mit den Merkmalen des Anspruchs 1 und ein Bohrsystem mit den Merkmalen des Anspruchs 9. Weitere Merkmale und Details der Erfindung ergeben sich aus den Unteransprüchen, der Beschreibung und den Zeichnungen. Dabei gelten Merkmale und Details, die im Zusammenhang mit der erfindungsgemäßen Aufsatzvorrichtung beschrieben sind, selbstverständlich auch im Zusammenhang mit dem erfindungsgemäßen Bohrsystem und jeweils umgekehrt, so dass bezüglich der Offenbarung zu den einzelnen Erfindungsaspekten stets wechselseitig Bezug genommen wird bzw. werden kann.

Eine erfindungsgemäße Aufsatzvorrichtung ist für ein Bohrsystem für ein Ausbohren eines nicht lösbaren mechanischen Verbindungselementes, insbesondere einer Nietverbindung, wie beispielsweise Dornbruchblindniete, Blindnietmuttern und Blindnietbolzen, ausgelegt. Eine solche Aufsatzvorrichtung weist einen Aufsatzkörper mit einer Aufsatzschnittstelle für eine drehmomentschlüssige Verbindung mit dem Bohrsystem auf. Die erfindungsgemäße Aufsatzvorrichtung zeichnet sich dadurch aus, dass an dem Aufsatzkörper zumindest ein Haltelement mit einer Halteöffnung für das drehmomentschlüssige Halten eines Kopfes einer Nietverbindung angeordnet ist. Dabei ist diese Halteöffnung zur Durchführung für einen Bohrer des Bohrsystems entlang einer Bohrachse ausgebildet. Unter einer drehmomentschlüssigen Verbindung ist insbesondere eine kraft- und/oder formschlüssige Verbindung gemeint. D.h., es kann sich dabei beispielsweise nur um eine kraftschlüssige Verbindung, wie einen Reibschluss, handelt Es ist aber auch eine Kombinationen aus kraft- und formschlüssiger Verbindung denkbar.

Durch eine erfindungsgemäße Aufsatzvorrichtung erfolgt also eine doppelte drehmomentschlüssige Abstützung. Zum einen ist es möglich, die Aufsatzvorrichtung selbst durch den Aufsatzkörper und die Aufsatzschnittstelle drehmomentschlüssig mit dem Bohrsystem zu verbinden und eine Verdrehsicherung zwischen dem Aufsatzkörper einerseits und dem Bohrsystem andererseits zu schaffen. Darüber hinaus kann über das Halteelement, insbesondere die Halteöffnung, eine verdrehsichere Verbindung zu dem Kopf einer Nietverbindung durch das drehmomentschlüssige Halten zur Verfügung gestellt werden. Während der Durchführung eines Bohrverfahrens erfolgt also ein Drehmomentschluss vom Kopf einer Nietverbindung über die Halteöffnung und das Halteelement, über den Aufsatzkörper und die Aufsatzschnittstelle in das Bohrsystem hinein. Damit wird sichergestellt, dass eine Relativrotation zwischen dem Kopf der Nietverbindung und dem Bohrsystem unterbleibt. Da jedoch eine Relativbewegung zwischen dem Bohrsystem und dem Bohrer die Bohrrotation um die Bohrachse erzeugt, kann auf diese Weise sichergestellt werden, dass immer eine Relativrotation zwischen dem Bohrer und dem Kopf der Nietverbindung besteht. Ein Mitdrehen, wie es bei bekannten Vorgehensweisen zum Ausbohren von Nietverbindungen vorkommen kann, wird auf diese Weise wirksam vermieden.

Es ist darauf hinzuweisen, dass selbstverständlich die Aufsatzvorrichtung und insbesondere der Aufsatzkörper ausgebildet sind, um eine Axialbewegung des Bohrers entlang der Bohrachse zur Durchführung durch die Halteöffnung zuzulassen. Hierfür sind unterschiedlichste konstruktive Ausgestaltungen denkbar. Z. B. sind Linearführungen möglich, die eine axiale Verschiebbarkeit bzw. eine axiale Relativbewegung entlang der Bohrachse zwischen der Aufsatzschnittstelle und dem Halteelement, insbesondere der Halteöffnung, zulassen. Dementsprechend kann sich also die axiale Beabstandung zwischen der Aufsatzschnittstelle und der Halteöffnung reduzieren lassen, so dass auf diese Weise ein fest in dem Bohrsystem eingespannter Bohrer für die Durchführung durch die Halteöffnung ausgebildet ist.

Eine Nietverbindung ist im Sinne der vorliegenden Erfindung insbesondere eine Verbindung, welche irreversibel aus wenigstens zwei Bauteilen hergestellt wird. Z. B. kann ein Blindniet hergestellt sein, welcher durch das Abreißen des Nietstiftes und eine entsprechende plastische Verformung die Nietverbindung herstellt. Auch andere Nietverbindungen sind im Sinne der vorliegenden Erfindung denkbar. So sind z. B. Blindnietmutterverbindungen zu nennen, bei welchen nach dem Einschrauben eines Gewindestiftes ein Setzprozess erfolgt, bei dem der Gewindestift zurückgezogen wird, wodurch für die Herstellung der Nietverbindung die plastische Verformung des Elements entsteht. In allen Fällen wird die Nietverbindung durch plastische Verformung zumindest eines Abschnitts eines Nietbauteils erzeugt, so dass anschließend diese irreversible Nietverbindung nur durch erfindungsgemäßes Ausbohren mit den erfindungsgemäßen Vorteilen wieder entfernt werden kann.

Das Halteelement kann im Sinne der vorliegenden Erfindung selbstverständlich integraler Bestandteil bzw. monolithischer Bestandteil des Aufsatzkörpers sein. Selbstverständlich sind jedoch auch Ausführungsformen denkbar, bei welchen das Halteelement separat vom Aufsatzkörper und insbesondere auswechselbar gestaltet ist, wie dies später noch näher erläutert wird.

Der Aufsatzkörper kann ebenfalls einteilig oder mehrteilig ausgebildet sein. Insbesondere kann es vorteilhaft sein, wenn die Aufsatzschnittstelle mehrteilig ausgebildet ist, um die drehmomentschlüssige Verbindung mit dem Bohrsystem herzustellen. So ist es beispielsweise denkbar, dass die Aufsatzschnittstelle eine Mehrzahl von Schellenelementen aufweist, die miteinander über Schraubverbindungen verspannt werden können. Damit kann bei diesen Schellenelementen der Innendurchmesser reduziert werden, so dass eine radial nach innen wirkende Spannkraft auf einen Gehäuseabschnitt des Bohrsystems aufgebracht werden kann. Dies ist eine Möglichkeit die erfindungsgemäße drehmomentschlüssige Verbindung zur Verfügung zu stellen. Selbstverständlich sind auch andere Verbindungsarten für die Aufsatzschnittstelle, z. B. eine direkte Verschraubung, ein Verklemmen oder ein Verclipsen oder ähnliche Befestigungsmethoden denkbar.

Die Bohrachse des Bohrers ist im Sinne der vorliegenden Erfindung die Rotationsachse des Bohrers, wenn dieser sich im Bohrbetrieb befindet. Entlang dieser Bohrachse kann sich der Bohrer axial in beiden Richtungen bewegen, insbesondere in einer Richtung, welche auch als Bohrrichtung bezeichnet werden kann, um das Ausbohren der Nietverbindung zu erzeugen. Die Bohrachse und die Öffnungsachse der Halteöffnung verlaufen dabei vorzugsweise koaxial zueinander, sofern die Halteöffnung einen zumindest teilweise runden Abschnitt aufweist. Handelt es sich bei der Halteöffnung um eine Außenkontur, welche im Wesentlichen unrund ausgebildet ist, also von der Kreisform abweicht, so ist durch eine erfindungsgemäße Ausbildung sichergestellt, dass der freie Durchlassquerschnitt der Halteöffnung ausreichend groß für die Durchführung eines Bohrers ausgestaltet ist. Dementsprechend ist ein ausreichend großer Durchlassquerschnitt mit einem entsprechend großen freien Innendurchmesser zur Verfügung gestellt, welcher größer oder gleich, insbesondere jedoch größer als der Außendurchmesser des Bohrers ausgebildet ist.

Als Materialien kommen für die Aufsatzvorrichtung die einzelnen Komponenten der Aufsatzvorrichtung insbesondere Kunststoffe und/oder Metallmaterialien zum Einsatz.

Eine erfindungsgemäße Aufsatzvorrichtung kann dahin gehend weitergebildet sein, dass das Halteelement auswechselbar an dem Aufsatzkörper befestigt ist. Ein solches Halteelement kann auch als Wechseleinsatz bezeichnet bzw. ausgebildet sein. Auf diese Weise kann das Halteelement spezifisch an eine jeweilige Nietverbindung und/oder an einen jeweiligen Bohrerdurchmesser angepasst sein. Unterschiedliche Nietverbindungen weisen häufig unterschiedliche Nietkopfformen auf, so dass durch die Auswechselbarkeit des Halteelements die flexible Einsatzfähigkeit einer erfindungsgemäßen Aufsatzvorrichtung erhöht wird. Die Befestigung des auswechselbaren Halteelements erfolgt vorzugsweise über eine einfache mechanische Schnittstelle und ist insbesondere reversibel ausgeführt. Somit kann vorzugsweise auch bei einer bereits an dem Bohrsystem befestigten Aufsatzvorrichtung ein Auswechseln des Haltelements erfolgen.

Ebenfalls von Vorteil ist es, wenn bei einer erfindungsgemäßen Aufsatzvorrichtung das Haltelement zumindest eine mechanische Schnittstelle aufweist, mittels welcher es an dem Aufsatzkörper befestigt ist. Dabei weist die mechanische Schnittstelle insbesondere eine der folgenden Ausbildungen auf:
- Nutverbindung
- Stiftverbindung
- Clipverbindung
- Schraubverbindung
- Klemmverbindung

Eine solche mechanische Schnittstelle erlaubt insbesondere ein besonders einfaches und vorzugsweise reversibles Befestigen des Halteelements an dem Aufsatzkörper. Vorzugsweise werden dabei Verbindungsformen verwendet, welche ohne zusätzliche Werkzeuge zur Verfügung gestellt werden. Insbesondere sind also Nutverbindungen und/oder Stiftverbindungen bzw. Clipverbindungen und/oder Klemmverbindungen einsetzbar. Wird z. B. eine Stiftverbindung verwendet, so können federnd gelagerte Kugelköpfe insbesondere als Standardbauteil eingesetzt werden, um die mechanische Schnittstelle zu vervollständigen. Insbesondere können auch Kombinationen verschiedener Verbindungsformen für die mechanische Schnittstelle zur Verfügung gestellt werden, so dass z. B. eine Nutverbindung ein Einschieben des Halteelements mit einer definierten Ausrichtung erlaubt. In der final eingeschobenen Position kann in der Nutverbindung bzw. separat von der Nutverbindung über eine federnd gelagerte Stiftverbindung eine Fixierung des Haltelements erfolgen. Dementsprechend ist also ein Einrasten in der gewünschten Position denkbar, so dass eine Ausrichtung der Halteöffnung hinsichtlich der Bohrachse des Bohrers des Bohrsystems erfolgt.

Vorteilhaft ist es ebenfalls, wenn bei einer erfindungsgemäßen Aufsatzvorrichtung die Halteöffnung eine Außenkontur aufweist, welche von der Kreisform abweicht, insbesondere wenigstens abschnittsweise eine der folgenden Konturen aufweist:
- Quadratisch
- Rechteckig
- Dreieckig
- Kreisförmig
- Mehreckig
- Polygonal
- Dreidimensionaler Vorsprung

Auf Basis der voranstehenden nicht abschließenden Liste möglicher Beispiele für die Außenkontur wird klar, dass durch das Abweichen von der Kreisform eine Vielzahl von unterschiedlichen Formen der Außenkontur möglich wird. Durch das Abweichen von der Kreisform wird grundsätzlich bereits sichergestellt, dass die erfindungsgemäße drehmomentschlüssige Haltemöglichkeit in der Halteöffnung gegeben ist. Das Halten erfolgt also durch die Außenkontur der Halteöffnung oder durch einen Reibschluss zwischen dem auszubohrenden Verbindungselement und dem Halteöffnungsboden. Dieses Halten kann selbstverständlich mit weiteren Haltemöglichkeiten des Halteelements verknüpft sein. Unter einem dreidimensionalen Vorsprung sind insbesondere stiftartige Strukturen der Außenkontur zu verstehen, welche in eine entsprechende Gegenkontur eines Nietkopfes eingreifen. Unter einem dreidimensionalen Vorsprung können auch Zacken verstanden werden, die sich beim Ausbohren in das Verbindungselement einarbeiten, ohne dass eine Kontur im Verbindungselement vorgesehen wurde. Insbesondere wird bei dieser Ausbildung die gesamte Außenkontur der Halteöffnung an die entsprechende Außenkontur eines Nietkopfes angepasst sein. So können die größtmögliche Haltefläche zur Verfügung und dementsprechend die größtmögliche Sicherheit für das drehmomentschlüssige Halten zur Verfügung gestellt werden. Das Vorsehen einer erfindungsgemäßen Außenkontur reduziert den notwendigen Bauraum für das Halteelement, da sozusagen ein Überstülpen der Halteöffnung und damit des Haltelements über den Nietkopf erfolgt. Insbesondere ist dabei das Halteelement mit einer im Wesentlichen ebenen Anlagefläche um die Halteöffnung herum ausgebildet, so dass damit gleichzeitig ein Anliegen an dem Werkstück erfolgen kann. Dies stützt darüber hinaus das gesamte Bohrsystem über die Aufsatzvorrichtung und diese Fläche des Haltelements während der Durchführung des Ausbohrens ab.

Erfindungsgemäß ist es ebenfalls, wenn bei einer erfindungsgemäßen Aufsatzvorrichtung die Aufsatzschnittstelle für eine drehmomentschlüssige Verbindung mit dem Bohrsystem mittels Formschluss, insbesondere in reversibler Ausführung, ausgebildet ist. Selbstverständlich können kraftschlüssige und formschlüssige Verbindungsmöglichkeiten auch frei miteinander kombiniert werden, ohne den Rahmen der vorliegenden Erfindung zu verlassen. Auch das Verwenden von Hinterschnitten oder sogar bajonettartigen Verbindungsmöglichen ist für die Erzeugung eines Formschlusses möglich.

Vorteilhaft ist es darüber hinaus, wenn bei einer erfindungsgemäßen Aufsatzvorrichtung ein Tiefenanschlag an dem Aufsatzkörper angeordnet ist. Dieser Tiefenanschlag begrenzt die axiale Bewegung des Bohrers entlang seiner Bohrachse. Damit wird ein weiteres Problem gelöst, welches häufig bei bekannter Vorgehensweise für das Ausbohren von Nietverbindungen vorherrscht. So besteht grundsätzlich die Gefahr, dass der Bohrer beim Ausbohren der Nietverbindung zu tief eindringt und Bauteile beschädigt, welche axial in Bohrrichtung hinter der Nietverbindung liegen. Ein zu tiefes Eindringen des Bohrers würde dementsprechend zur Beschädigung und möglicherweise zu Ausschussware führen. Um dies zu vermeiden, kann erfindungsgemäß der Tiefenanschlag vorgesehen sein, welcher die axiale Bewegung des Bohrers entlang seiner Bohrachse und dementsprechend die Tiefe der durchgeführten Bohrung beschränkt.

Vorteilhaft ist es bei einer Aufsatzvorrichtung mit einem Tiefenanschlag, wenn der Tiefenanschlag eine Vorspannvorrichtung aufweist, welche den Tiefenanschlag in Bohrrichtung des Bohrers vorspannt. Dies ermöglicht ein automatisches Rückstellen nach der Beendigung des Vorganges. Mit anderen Worten kann eine Vielzahl von Ausbohrvorgängen hintereinander durchgeführt werden, ohne dass manuell der Tiefenanschlag rückgestellt werden muss. Die Bohrspannvorrichtung ist insbesondere als Federvorrichtung ausgebildet, die z. B. ein oder mehrere Federelemente aufweisen kann. Solche Federelemente können z. B. Spiralfedern sein. Bei der Verwendung von einer Vielzahl von Federelementen können diese in Umfangsrichtung verteilt um den Aufsatzkörper angeordnet sein. Insbesondere erfolgt eine symmetrische Verteilung rund um die Bohrachse, so dass ein symmetrisches Einfedern und ein Vermeiden einer Verkippung die Folge ist.

Darüber hinaus kann es vorteilhaft sein, wenn bei einer erfindungsgemäßen Aufsatzvorrichtung der Tiefenanschlag axial in Richtung der Bohrachse einstellbar ausgebildet ist. Auf diese Weise kann eine Vielzahl von unterschiedlichen Nietverbindungen hinsichtlich der notwendigen Ausbohrtiefe angepasst werden. Dementsprechend kann je nach Bohrer und je nach Nietverbindung der Tiefenanschlag in seiner axialen Richtung eingestellt werden, um die entsprechend notwendige Bohrtiefe zur Verfügung stellen zu können. Auf diese Weise wird die Einsatzflexibilität einer erfindungsgemäßen Aufsatzvorrichtung weiter verbessert.

Ein weiterer Vorteil wird erzielt, wenn bei einer erfindungsgemäßen Aufsatzvorrichtung der Aufsatzkörper einen Aufsatzinnenraum aufweist, welcher für die Aufnahme eines Bohrfutters des Bohrsystems ausgebildet ist. Mit anderen Worten umgibt der Aufsatzkörper im Wesentlichen vollständig das in dem Aufsatzinnenraum aufgenommene Bohrfutter. Es ist also nach außen abgeschirmt und kann sich relativ zum Aufsatzkörper in diesem Aufsatzinnenraum rotatorisch bewegen. Dies führt zu einer besonders kompakten Bauweise der Aufsatzvorrichtung im Gesamten. Darüber hinaus wird auf diese Weise eine achssymmetrische Ausbildung des Aufsatzkörpers um die Bohrachse des Bohrers herum möglich. Vorzugsweise ist dementsprechend auch die Aufsatzschnittstelle vollständig um die Bohrachse des Bohrsystems herum ausgebildet, so dass eine im Wesentlichen achssymmetrische Abstützung des von dem Halteelement aufgenommenen Drehmoments am Bohrsystem möglich wird. Dies verhindert insbesondere ein Verkippen des Bohrsystems während des Ausbohrvorganges.

Es ist bei einer erfindungsgemäßen Aufsatzvorrichtung eine Fixiervorrichtung vorgesehen, welche für die Fixierung eines Bohrfutters des Bohrsystems für den Austausch des Bohrers ausgebildet ist. Wird eine erfindungsgemäße Aufsatzvorrichtung auf ein Bohrsystem, insbesondere z. B. einem Handbohrsystem in Form eines Akkuschraubers, aufgesetzt, so ist häufig der Zugriff zum Bohrfutter durch den Aufsatzkörper verdeckt. Um den Bohrer zu wechseln, wird jedoch das Bohrfutter rotatorisch bewegt werden müssen, um das Dreibackenfutter zu öffnen und den Bohrer entnehmen zu können. Um nun sicherzustellen, dass der Bohrerwechsel auch mit aufgesetzter Aufsatzvorrichtung ermöglicht werden kann, ist erfindungsgemäß eine Fixiervorrichtung vorsehbar. Diese kann z. B. eine Bügelform aufweisen und durch Öffnungen in dem Aufsatzkörper in dessen Aufsatzinnenraum geführt sein. In diesem Aufsatzinnenraum kann ein Verklemmen bzw. durch einen Pressverbund ein Drehmomentschluss zwischen der Fixiervorrichtung und dem Bohrfutter erfolgen, so dass über die Bügelform als Fixiervorrichtung wie mit der Hand oder einer weiteren alternativen Fixiervorrichtung das Bohrfutter gehalten werden kann und dementsprechend durch Rotation der Bohrer ausgetauscht werden kann.

Ein weiterer Gegenstand der vorliegenden Erfindung ist ein Bohrsystem für das Ausbohren einer Nietverbindung, aufweisend einen um eine Bohrachse rotierbar gelagerten Bohrer. Weiter ist eine Aufsatzvorrichtung gemäß der vorliegenden Erfindung vorgesehen, welche drehmomentschlüssig über die Aufsatzschnittstelle mit dem Bohrsystem verbunden ist. Bei dem Bohrsystem handelt es sich insbesondere um ein Handbohrsystem, welches sich von Portalbohrsystemen, also fest mit einer jeweiligen Gerätschaft verbundenen Bohrsystemen unterscheidet. Insbesondere können als Handbohrsysteme Akkuschrauber eingesetzt werden, welche vorzugsweise mit ein oder zwei Händen eines Monteurs bedienbar sind. Durch die Verwendung einer erfindungsgemäßen Aufsatzvorrichtung bringt ein erfindungsgemäßes Bohrsystem die gleichen Vorteile mit sich, wie sie ausführlich mit Bezug auf eine erfindungsgemäße Aufsatzvorrichtung erläutert worden sind.

Die vorliegende Erfindung wird näher erläutert anhand der beigefügten Zeichnungsfiguren. Die dabei verwendeten Begrifflichkeiten "links", "rechts", "oben" und "unten" beziehen sich auf eine Ausrichtung der Zeichnungsfiguren mit normal lesbaren Bezugszeichen. Es zeigen schematisch:
- Fig. 1: eine erste Ausführungsform einer erfindungsgemäßen Aufsatzvorrichtung im schematischen Querschnitt,
- Fig. 2: die Ausführungsform der Fig. 1 in Seitenansicht mit einer Teiltransparenz,
- Fig. 3: eine Ausführungsform eines erfindungsgemäßen Bohrsystem mit aufgesetzter Aufsatzvorrichtung,
- Fig. 4: die Ausführungsform der Fig. 3 in detaillierter Teilansicht,
- Fig. 5: eine Fixiervorrichtung in Seitenansicht,
- Fig. 6a: eine Ausführungsform eines Halteelements,
- Fig. 6b: eine weitere Ausführungsform eines Halteelements,
- Fig. 6c: eine weitere Ausführungsform eines Halteelements,
- Fig. 7: eine weitere Ausführungsform eines Halteelements in Seitenansicht.
- Fig. 8: das Halteelement gemäß Fig. 7 in einer perspektivischen Ansicht und.
- Fig. 9: das Halteelement gemäß Fig. 7 in einer Frontansicht.

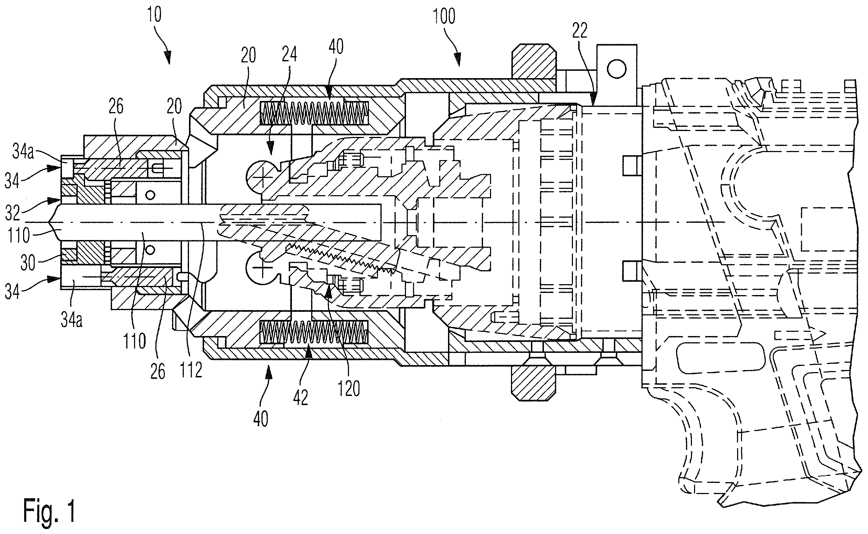

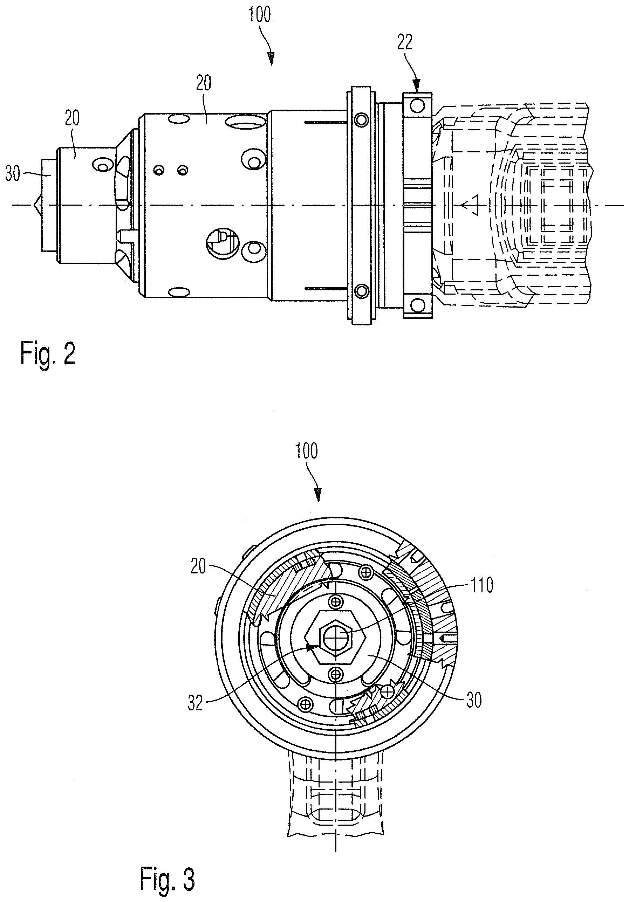

In den Fig. 1 und 2 ist eine erste Ausführungsform einer erfindungsgemäßen Aufsatzvorrichtung 10 dargestellt. Diese ist bereits auf einem Bohrsystem 100 aufgesetzt und über eine Aufsatzschnittstelle 22 drehmomentschlüssig mit dem Bohrsystem 100 verbunden. Bei dieser Ausführungsform handelt es sich bei der Aufsatzschnittstelle 22 um eine Mehrzahl von Schellenelementen, welche über Schraubverbindungen eine Radialkraft nach innen auf das Gehäuse des Bohrsystems 100 ausüben können. Damit wird die drehmomentschlüssige Verbindung zur Verfügung gestellt.

Des Weiteren ist bei dieser Ausführungsform der Aufsatzvorrichtung 10 zu erkennen, dass ein Haltelement 30 am linken Ende eines Aufsatzkörpers 20 angeordnet ist. Das Halteelement 30 ist auswechselbar und separat auf dem Aufsatzkörper 20 ausgestaltet. Der Aufsatzkörper 20 weist einen Hohlraum in seinem Inneren auf, der als Aufsatzinnenraum 24 ausgebildet ist. Dieser Aufsatzinnenraum 24 nimmt das Bohrfutter 120 des Bohrsystems 100 auf.

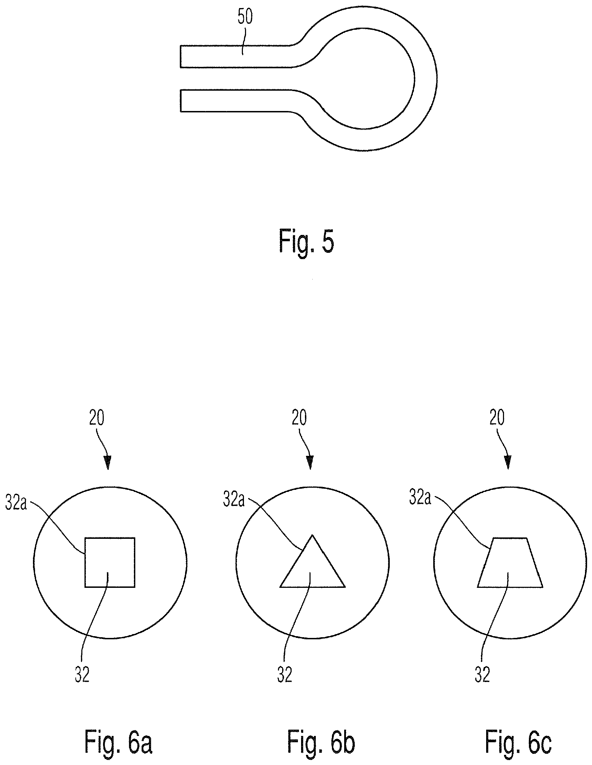

Das Haltelement 30 dieser Ausführungsform der Aufsatzvorrichtung 10 weist eine Halteöffnung 32 auf, welche einen größeren freien Durchlassquerschnitt aufweist, als der Außendurchmesser eines Bohrers 110. So kann sich dieser Bohrer 110 entlang seiner Bohrachse 112 axial von rechts nach links bewegen, wenn der Ausbohrvorgang vorgesetzt wird. Darüber hinaus ist bei dieser Ausführungsform die Halteöffnung 32 mit einer Außenkontur 32a ausgestattet (siehe z. B. Fig. 6a bis 6c), welche von der Kreisform abweicht und dementsprechend den Kopf einer Nietverbindung halten kann.

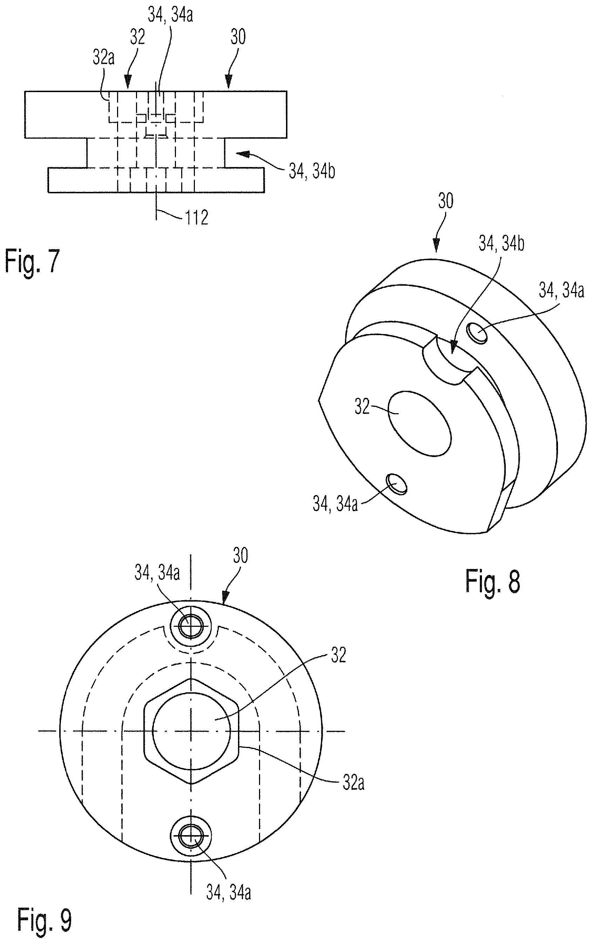

Ebenfalls gut zu erkennen ist in der Fig. 1, wie das Halteelement 30 in der dargestellten Position befestigt ist. Die Befestigung erfolgt einmal über eine Nut 34b, wie sie z. B. in den Fig. 7, 8 und 9 dargestellt ist. Darüber hinaus sind zwei Bohrungen 34a vorgesehen, in welche Federstifte 26 zur mechanischen Befestigung und damit zur Ausbildung der mechanischen Schnittstelle 34 einrasten können.

Des Weiteren ist bei der Ausführungsform der Aufsatzvorrichtung 10 gemäß Fig. 1 und 2 ein Tiefenanschlag 40 vorgesehen, welcher eine Vielzahl von Vorspannvorrichtungen 42 in Form von Federelementen aufweist. Diese sind in Umfangsrichtung verteilt um den Aufsatzkörper 20 angeordnet und erlauben eine Relativbewegung des linken Teils des Aufsatzkörpers 20 und damit des Haltelements 30 relativ zur Aufsatzschnittstelle 22 entlang der Bohrachse 112. Auf diese Weise wird die Relativbewegung des Bohrers 110 für den Ausbohrvorgang zur Verfügung gestellt und gleichzeitig eine Tiefenbegrenzung aufgebracht. Diese Tiefenbegrenzung verhindert ein Verletzen von tieferliegendem Material, wenn der Ausbohrvorgang der Nietverbindung beendet ist.

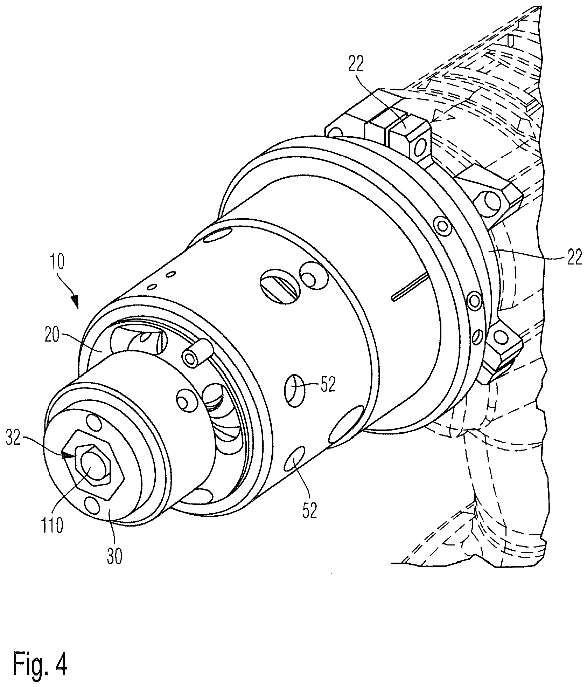

Die Fig. 3 und 4 zeigen ein Bohrsystem 100, auf welchem eine erfindungsgemäße Aufsatzvorrichtung 10 aufgesetzt ist. In Fig. 5 ist eine Fixiervorrichtung 50 in bügelartiger Weise dargestellt. Diese Fixiervorrichtung 50 kann in die Aufsatzvorrichtung 10 eingeschoben werden oder vollständig für den Betrieb der Aufsatzvorrichtung 10 entfernt werden. Wird ein Austausch des Bohrers 110 gewünscht, so kann die bügelartige Fixiervorrichtung 50 in die Aufnahmeöffnungen 52 in dem Aufsatzkörper 20 eingeschoben werden. In der eingeschobenen Position der Fixiervorrichtung 50 findet im Inneren des Aufsatzkörpers 20, also im Aufsatzinnenraum 24, ein drehmomentschlüssiges Halten des Bohrfutters 120 durch die Fixiervorrichtung 50 statt. Auf diese Weise kann eine Relativrotation zwischen Bohrer 110 und Bohrfutter 120 erfolgen, so dass auf diese Weise der Bohrer 110 austauschbar wird.

Die Fig. 6a bis 6c zeigen drei verschiedene beispielhafte Möglichkeiten, wie die Außenkontur 32a einer Halteöffnung 32 des Haltelements 30 ausgebildet sein kann. Alle Halteöffnungen 32 weisen eine Außenkontur 32a auf, welche von der Kreisform abweicht. Auf diese Weise wird vorzugsweise durch vollständigen Formschluss mit der Außenkontur eines Kopfes einer Nietverbindung das erfindungsgemäße drehmomentschlüssige Halten möglich. Diese einzelnen Haltelemente 30 sind vorzugsweise auswechselbar hinsichtlich des Einsatzes an dem Aufsatzkörper 20 ausgebildet.

Die Fig. 7 bis 9 zeigen in verschiedenen Ansichten eine Möglichkeit solcher Auswechselbarkeit. So sind bei dem dort dargestellten Haltelemente 30 mechanische Schnittstellen 34 in Form von zwei Bohrungen 34a und einer Nut 34b dargestellt. Dabei kann es sich vorzugsweise um ein Haltelement 30 handeln, wie es in den Fig. 1 bis 4 an diesen Ausführungsformen der Aufsatzvorrichtung 10 eingesetzt ist. So ist in Fig. 3 und 4 gut zu erkennen, dass der in Fig. 4 linke Teil des Aufsatzkörpers 20 an seinem Ende nach unten geöffnet ist, also im Wesentlichen ein umgedrehtes U aufweist. Dementsprechend kann in dieses umgedrehte U eine außen am Haltelement 30 vorgesehene Nut 34b eingreifen, so dass ein Einschieben und gleichzeitiges Ausrichten des Haltelements 30 am Aufnahmekörper 20 erfolgt. Sobald das Haltelement 30 die Position erreicht hat, in welcher die Korrelation zur Bohrachse 112 für den Durchlass des Bohrers 110 möglich ist, rasten Federstifte 26 in die Bohrungen 34a ein, wie dies die Fig. 1 zeigt. Auf diese Weise wird in der ausgerichteten Position des Haltelements 30 dieses Haltelement 30 auch fixiert.

### Bezugszeichenliste

- 10: Aufsatzvorrichtung
- 20: Aufsatzkörper
- 22: Aufsatzschnittstelle
- 24: Aufsatzinnenraum
- 26: Federstift
- 30: Halteelement
- 32: Halteöffnung
- 32a: Außenkontur
- 34: mechanische Schnittstelle
- 34a: Bohrung
- 34b: Nut
- 40: Tiefenanschlag
- 42: Vorspannvorrichtung
- 50: Fixiervorrichtung
- 52: Aufnahmeöffnungen

- 100: Bohrsystem
- 110: Bohrer
- 112: Bohrachse
- 120: Bohrfutter

## Patentansprüche

1. Aufsatzvorrichtung (10) für ein Bohrsystem (100) für ein Ausbohren eines nicht lösbaren mechanischen Verbindungselementes, insbesondere einer Nietverbindung, aufweisend einen Aufsatzkörper (20) mit einer Aufsatzschnittstelle (22) für eine drehmomentschlüssige Verbindung mit dem Bohrsystem (100), wobei an dem Aufsatzkörper (20) zumindest ein Haltelement (30) mit einer Halteöffnung (32) für das drehmomentschlüssige Halten eines Kopfes eines Verbindungselementes angeordnet ist, wobei die Halteöffnung (32) zur Durchführung für einen Bohrer (110) des Bohrsystems (100) entlang einer Bohrachse (120) ausgebildet ist, und wobei die Aufsatzschnittstelle (22) für eine drehmomentschlüssige Verbindung mit dem Bohrsystem (100) mittels Formschluss ausgebildet ist, **dadurch gekennzeichnet, dass** eine bügelartig ausgebildete Fixiervorrichtung (50) vorgesehen ist, welche für die Fixierung eines Bohrfutters (120) des Bohrsystem (100) für den Austausch des Bohrers (110) ausgebildet ist, wobei der Aufsatzkörper (20) Aufnahmeöffnungen (52) zum Einschieben der Fixiervorrichtung (50) aufweist, und wobei die Fixiervorrichtung (50) für den Betrieb der Aufsatzvorrichtung (10) vollständig vom Aufsatzkörper (20) entfernbar ausgebildet ist.

2. Aufsatzvorrichtung (10) nach Anspruch 1, **dadurch gekennzeichnet, dass** das Halteelement (30) auswechselbar an dem Aufsatzkörper (20) befestigt ist.

3. Aufsatzvorrichtung (10) nach Anspruch 2, **dadurch gekennzeichnet, dass** das Halteelement (30) zumindest eine mechanische Schnittstelle (34) aufweist, mittels welcher es an dem Aufsatzkörper (20) befestigt ist, wobei die mechanische Schnittstelle (34) insbesondere eine der folgenden Ausbildungen aufweist:
- Nutverbindung
- Stiftverbindung
- Clipverbindung
- Schraubverbindung
- Klemmverbindung

4. Aufsatzvorrichtung (10) nach einem der vorangegangenen Ansprüche,
**dadurch gekennzeichnet, dass** die Halteöffnung (32) eine Außenkontur (32a) aufweist, welche von der Kreisform abweicht, insbesondere wenigstens abschnittsweise eine der folgenden Konturen aufweist:
- Quadratisch
- Rechteckig
- Dreieckig
- Mehreckig
- kreisförmig
- Polygonal
- Dreidimensionaler Vorsprung

5. Aufsatzvorrichtung (10) nach einem der vorangegangenen Ansprüche,
**dadurch gekennzeichnet, dass** ein Tiefenanschlag (40) an dem Aufsatzkörper (20) angeordnet ist, welcher die axiale Bewegung des Bohrers (110) entlang seiner Bohrachse (120) begrenzt.

6. Aufsatzvorrichtung (10) nach Anspruch 5, **dadurch gekennzeichnet, dass** der Tiefenanschlag (40) eine Vorspannvorrichtung (42) aufweist, welche den Tiefenanschlag (40) in Bohrrichtung des Bohrers (110) vorspannt.

7. Aufsatzvorrichtung (10) nach einem der Ansprüche 5 oder 6, **dadurch gekennzeichnet, dass** der Tiefenanschlag (40) axial in Richtung der Bohrachse (112) einstellbar ausgebildet ist.

8. Aufsatzvorrichtung (10) nach einem der vorangegangenen Ansprüche,
**dadurch gekennzeichnet, dass** der Aufsatzkörper (20) einen Aufsatzinnenraum (24) aufweist, welcher für die Aufnahme eines Bohrfutters (120) des Bohrsystems (100) ausgebildet ist.

9. Bohrsystem (100) für das Ausbohren eines nicht lösbaren mechanischen Verbindungselementes, insbesondere einer Nietverbindung, aufweisend einen um eine Bohrachse (112) rotierbar gelagerten Bohrer (110) und eine Aufsatzvorrichtung (10) mit den Merkmalen eines der Ansprüche 1 bis 8, welche drehmomentschlüssig über die Aufsatzschnittstelle (22) mit dem Bohrsystem (10) verbunden ist.

## Claims

1. Attachment device (10) for a drilling system (100) for drilling out a non-releasable mechanical connection element, in particular a rivet connection, having an attachment body (20) with an attachment interface (22) for torque-locking connection to the drilling system (100), wherein at least one retaining element (30) with a retaining opening (32) for the torque-locking retention of a head of a connection element is arranged on the attachment body (20), wherein the retaining opening (32) is designed for guiding through a drill bit (110) of the drilling system (100) along a drilling axis (120), and wherein the attachment interface (22) is designed for torque-locking connection to the drilling system (100) by means of a form-fit, **characterized in that** a clip-like fixing device (50) is provided which is designed for fixing a drill chuck (120) of the drilling system (100) to allow the drill bit (110) to be replaced, wherein the attachment body (20) has receiving openings (52) for inserting the fixing device (50), and wherein the fixing device (50) is designed to be completely removable from the attachment body (20) for the operation of the attachment device (10).

2. Attachment device (10) according to Claim 1, **characterized in that** the retaining element (30) is fastened interchangeably on the attachment body (20).

3. Attachment device (10) according to Claim 2, **characterized in that** the retaining element (30) has at least one mechanical interface (34) by means of which it is fastened on the attachment body (20), wherein the mechanical interface (34) has in particular one of the following designs:
- groove connection
- pin connection
- clip connection
- screw connection
- clamping connection

4. Attachment device (10) according to one of the preceding claims, **characterized in that** the retaining opening (32) has an outer contour (32a) which differs from a circular shape, in particular having one of the following contours at least in certain portions:
- square
- rectangular
- triangular
- polygonal
- circular
- three-dimensional projection

5. Attachment device (10) according to one of the preceding claims, **characterized in that** a depth stop (40) is arranged on the attachment body (20) and limits the axial movement of the drill bit (110) along its drilling axis (120).

6. Attachment device (10) according to Claim 5, **characterized in that** the depth stop (40) has a preloading device (42) which preloads the depth stop (40) in the drilling direction of the drill bit (110).

7. Attachment device (10) according to either of Claims 5 and 6, **characterized in that** the depth stop (40) is designed to be adjustable axially in the direction of the drilling axis (112).

8. Attachment device (10) according to one of the preceding claims, **characterized in that** the attachment body (20) has an attachment interior (24) which is designed to receive a drill chuck (120) of the drilling system (100).

9. Drilling system (100) for drilling out a non-releasable mechanical connection element, in particular a rivet connection, having a drill bit (110), which is mounted so as to be rotatable about a drilling axis (112), and an attachment device (10) having the features of one of Claims 1 to 8 which is connected with the drilling system (10) in a torque-locking manner via the attachment interface (22).

## Revendications

1. Dispositif rapporté (10) pour un système de forage (100) pour un forage d'un élément de liaison mécanique non amovible, notamment d'une liaison par rivet, présentant un corps rapporté (20) comprenant une interface rapportée (22) pour une liaison à couple de rotation avec le système de forage (100), au moins un élément de retenue (30) comprenant une ouverture de retenue (32) étant agencé sur le corps rapporté (20) pour la retenue à couple de rotation d'une tête d'un élément de liaison, l'ouverture de retenue (32) étant configurée pour le passage d'un foret (110) du système de forage (100) le long d'un axe de forage (120), et l'interface rapportée (22) étant configurée pour une liaison à couple de rotation avec le système de forage (100) au moyen d'une complémentarité de forme, **caractérisé en ce qu'**un dispositif de fixation (50) configuré en forme d'étrier est prévu, qui est configuré pour la fixation d'un mandrin de forage (120) du système de forage (100) pour le remplacement du foret (110), le corps rapporté (20) présentant des ouvertures de réception (52) pour l'insertion du dispositif de fixation (50), et le dispositif de fixation (50) étant configuré pour pouvoir être entièrement retiré du corps rapporté (20) pour l'exploitation du dispositif rapporté (10).

2. Dispositif rapporté (10) selon la revendication 1, **caractérisé en ce que** l'élément de retenue (30) est fixé de manière interchangeable sur le corps rapporté (20) .

3. Dispositif rapporté (10) selon la revendication 2, **caractérisé en ce que** l'élément de retenue (30) présente au moins une interface mécanique (34), au moyen de laquelle il est fixé au corps rapporté (20), l'interface mécanique (34) présentant notamment une des configurations suivantes :
- liaison par rainure
- liaison par broche
- liaison par clip
- liaison par vis
- liaison par serrage.

4. Dispositif rapporté (10) selon l'une quelconque des revendications précédentes, **caractérisé en ce que** l'ouverture de retenue (32) présente un contour extérieur (32a), qui s'écarte de la forme circulaire, notamment présente au moins par sections un des contours suivants :
- carré
- rectangulaire
- triangulaire
- à plusieurs angles
- circulaire
- polygonal
- saillie tridimensionnelle.

5. Dispositif rapporté (10) selon l'une quelconque des revendications précédentes, **caractérisé en ce qu'**une butée de profondeur (40) est agencée sur le corps rapporté (20), laquelle limite le mouvement axial du foret (110) le long de son axe de forage (120).

6. Dispositif rapporté (10) selon la revendication 5, **caractérisé en ce que** la butée de profondeur (40) présente un dispositif de précontrainte (42), qui précontraint la butée de profondeur (40) dans la direction de forage du foret (110).

7. Dispositif rapporté (10) selon l'une quelconque des revendications 5 ou 6, **caractérisé en ce que** la butée de profondeur (40) est configurée pour être réglable axialement dans la direction de l'axe de forage (112).

8. Dispositif rapporté (10) selon l'une quelconque des revendications précédentes, **caractérisé en ce que** le corps rapporté (20) présente un espace intérieur rapporté (24), qui est configuré pour recevoir un mandrin de forage (120) du système de forage (100).

9. Système de forage (100) pour le forage d'un élément de liaison mécanique non amovible, notamment d'une liaison par rivet, présentant un foret (110) logé de manière à pouvoir tourner autour d'un axe de forage (112) et un dispositif rapporté (10) ayant les caractéristiques de l'une quelconque des revendications 1 à 8, lequel est relié à couple de rotation au système de forage (10) par l'intermédiaire de l'interface rapportée (22).
